# EUROPÄISCHE PATENTSCHRIFT

(11) **EP 1 700 085 B1**
(45) Veröffentlichungstag und Bekanntmachung des Hinweises auf die Patenterteilung: **26.10.2011**
(21) Anmeldenummer: 04804201.4
(22) Anmeldetag: 22.12.2004
(51) Int. Cl.: G01C 15/00, G01S 17/89, G01B 11/24, G01S 7/497, G01S 7/489

(54) **LASERSCANNER UND VERFAHREN ZUM OPTISCHEN ABTASTEN UND VERMESSEN EINER UMGEBUNG DES LASERSCANNERS**
LASER SCANNER, AND METHOD FOR THE OPTICAL SCANNING AND MEASUREMENT OF A LASER SCANNER ENVIRONMENT
SCANNER LASER ET PROCEDE POUR EFFECTUER LE BALAYAGE OPTIQUE ET LA MESURE DE L'ENVIRONNEMENT DU SCANNER LASER

(30) Priorität: 29.12.2003 DE 10361870
(43) Veröffentlichungstag der Anmeldung: 13.09.2006
(73) Patentinhaber: FARO TECHNOLOGIES INC., Lake Mary, Florida 32746-6204 (US)
(72) Erfinder: OSSIG, Martin, 71732 Tamm (DE); BECKER, Reinhard, 71642 Ludwigsburg (DE); BECKER, Bernd-Dietmar, 71640 Ludwigsburg (DE)
(74) Vertreter: Patentanwälte Hosenthien-Held und Dr. Held
(86) Internationale Anmeldenummer: PCT/EP2004/014605
(87) Internationale Veröffentlichungsnummer: WO 2005/064273

(56) Entgegenhaltungen:
- DE-A1- 2 216 765
- DE-U1- 20 208 077
- US-A- 5 313 261
- US-A1- 2002 143 506

## Beschreibung

Die Erfindung betrifft einen Laserscanner zum optischen Abtasten und Vermessen einer Umgebung des Laserscanners, mit einem Messkopf, der einen Lichtsender vorgegebener Sendeleistung zum Aussenden eines Lichtstrahls aufweist und um mindestens eine Achse drehbar ist, wobei der ausgesandte Lichtstrahl an einem Messpunkt eines Objektes in der Umgebung reflektiert und der reflektierte Lichtstrahl mit einer Intensität von einem im Messkopf enthaltenen Empfänger empfangen wird.

Die Erfindung betrifft ferner ein Verfahren zum optischen Abtasten und Vermessen einer Umgebung mittels eines Laserscanners, bei dem ein Lichtstrahl vorgegebener Sendeleistung ausgesandt und dabei um mindestens eine Achse gedreht wird, wobei der ausgesandte Lichtstrahl an einem Objekt in der Umgebung reflektiert und der reflektierte Lichtstrahl empfangen wird.

Eine Vorrichtung und ein Verfahren der vorstehend genannten Art sind bekannt. Derartige Vorrichtungen werden beispielsweise von der Anmelderin hergestellt und vertrieben. Auf diesen Vorrichtungen ist das genannte Verfahren ausführbar.

Laserscanner der eingangs genannten Art werden dazu eingesetzt, um Innen- und Außenräume verschiedenster Art abzutasten und zu vermessen. Dies können z.B. Fabrikationshallen oder dergleichen sein, in denen bestimmte Einrichtungen projektiert werden. In diesem Fall wird der Laserscanner auf einem Stativ in den zu vermessenden Raum gestellt, und der Messkopf wird langsam um eine vertikale Achse gedreht, während ein im Messkopf angeordneter Rotor mit einem Lichtsender mit wesentlich höherer Drehzahl um eine horizontale Achse rotiert. Auf diese Weise wird durch die schnelle Rotation ein Lichtfächer in einer Vertikalebene erzeugt, der langsam um z.B. 360° gedreht wird, so dass schlussendlich die gesamte Umgebung abgetastet wurde. Die ausgesandten Lichtstrahlen werden von den Punkten der Umgebung reflektiert, und der reflektierte Lichtstrahl wird vom Messkopf wieder empfangen. Dabei wird sowohl der Abstand des jeweils gemessenen Punktes der Umgebung wie auch dessen Reflektionsvermögen bestimmt, so dass schlussendlich eine getreue Abbildung mit im Idealfall 360° Raumwinkel entsteht.

Bei einer anderen Anwendung erfindungsgemäßer Vorrichtungen werden langgestreckte Hohlräume, insbesondere Tunnels, ausgemessen. In diesem Fall ist am Messkopf lediglich der um eine Horizontalachse rotierende Lichtsender vorgesehen, der in diesem Fall nicht zusätzlich langsam um eine Vertikalachse gedreht, sondern vielmehr entlang des zu vermessenden Tunnels bewegt wird. Auf diese Weise kann man z.B. den Zustand von Tunnels kontrollieren, die lichte Weite an jedem Punkt des Tunnels bestimmen usw.

Laserscanner der vorstehend genannten Art sind üblicherweise für einen bestimmten Entfernungsbereich spezifiziert. Dies bedeutet, dass je nach Güteklasse der verwendeten Bauelemente Objekte in mehr oder weniger großer Entfernung noch erfasst und vermessen werden können. Die Intensität des reflektierten Lichtstrahls hängt dabei von der Entfernung des Messpunktes, aber natürlich auch von dessen Reflektionsvermögen, dem so genannten Grauwert, ab.

Bei Anwendungen von Laserscannern mit großem Entfernungsbereich, wobei also auch in relativ großer Entfernung befindliche Objekte noch zuverlässig erkannt und vermessen werden sollen, und mit großem Grauwertbereich, wobei also auch noch Messpunkte mit relativ schlechtem Reflektionsvermögen zuverlässig differenziert werden sollen, stößt man bald an die Dynamikgrenze des Empfängers. Hierbei muss man berücksichtigen, dass die Intensität des reflektierten Lichtstrahls bereits überproportional mit der Entfernung abnimmt. So beträgt die Lichtmenge, die von einem Objekt im Abstand von 50 m reflektiert wird, nur etwa das 4 x 10⁻⁶-fache der Lichtmenge, die von einem Objekt im Abstand von 0,1 m reflektiert wird. Hinzu kommt noch der Bereich der unterschiedlichen Grauwerte. Nach dem derzeitigen Stand der Technik sind keine Empfänger verfügbar, die einen derartig breiten Dynamikbereich erfassen.

Aus der DE 20208077 U ist ein 3D-laser-Meßsytem bekannt.

Aus der DE 22 16 765 C3 sind ein Verfahren und eine Vorrichtung zur Entfernungsmessung bekannt. Dabei wird einerseits die Entfernung zu einem bestimmten Messpunkt und optional auch das Reflexionsvermögen des Messpunktes bestimmt. Die Entfernung wird dabei aus einer Laufzeitmessung zwischen einem ausgesandten Lichtimpuls und dem vom Messpunkt reflektierten Lichtimpuls ermittelt. Dabei können Fehler auftreten, wenn die Laufzeitmessung dann beendet wird, wenn das empfangene Signal, d.h. ein aus dem reflektierten Lichtimpuls erzeugter Signalimpuls, einen bestimmten Triggerpegel erreicht, dieser Signalimpuls aber eine undefinierte Maximalamplitude hat. Um diesen Fehler auszuschließen, wird eine Regelung vorgenommen, die eine Nachstellung bewirkt, derart, dass der Signalimpuls von einem niedrigeren Anfangswert angehoben wird, bis er einen definierten Pegel erreicht hat. Die Regelung arbeitet entweder über eine Nachstellung der Sendeleistung oder der Empfangsverstärkung vor der Erzeugung des Signalimpulses. Das Reflexionsvermögen wird dadurch bestimmt, dass die Amplitude des Signalimpulses vor dem Anheben auf den definierten Pegel erfasst und mit einer vorgegebenen Sendeleistung verglichen wird. Dabei wird ferner aus der gemessenen Entfernung noch eine Wichtung durchgeführt, um die Abhängigkeit der Amplitude des reflektierten Lichtimpulses von der Entfernung des Messpunktes herauszurechnen.

Die bekannte Vorrichtung bzw. Das bekannte Verfahren sind damit nur für die Messung an einem einzigen Messpunkt geeignet, weil der Messpunkt durch Nachstellen der Sendeleistung und/oder der Empfangsverstärkung jeweils für sich optimiert werden muß. Das schließt abtastende 2D- oder 3D-Messungen einer Umgebung aus.

Ferner kann das Reflexionsvermögen des Messpunktes bei diesem bekannten Vorgehennur dann bestimmt werden, wenn die absolute Sendeleistung in dem noch nicht nachgestellten System bekannt ist. Die Einbeziehung der schlussendlich ermittelten Entfernung und die Wichtung des Reflexionswertes mit dieser Entfernung führt schließlich zu einem absoluten Wert des Reflexionsvermögens am Ort des Messpunktes, nicht jedoch zu dem am Ort der Messapparatur wahrgenommen Grauwert. Dieser ist nämlich entfernungsunabhängig. Bei einer Darstellung einer Umgebung nach Art eines Photos hat nämlich jeder Punkt für einen Beobachter einen Grauwert, der nichts darüber aussagt, wie weit der Punkt vom Beobachter entfernt ist. Mit dem bekannten Vorgehen können daher Bildaufnahmen einer Umgebung nicht hergestellt werden.

Der Erfindung liegt daher die Aufgabe zu Grunde, einen Laserscanner und ein Verfahren der eingangs genannten Art dahingehend weiterzubilden, dass die vorstehend genannten Nachteile vermieden werden. Insbesondere sollen ein Laserscanner und ein Verfahren bereitgestellt werden, mit denen Messungen über einen weiten Entfernungs- und Grauwertbereich möglich sind.

Bei einem Laserscanner der eingangs genannten Art wird diese Aufgabe erfindungsgemäß dadurch gelöst, dass erste Mittel zum Einstellen der Sendeleistung in Abhängigkeit von der Intensität des reflektierten Lichtstrahls vorgesehen sind, dass dem Empfänge ferner zweite Mittel zum Bestimmen eines Grauwertes des Messpunkte zugeordnet sind, und dass die zweiten Mittel in Abhängigkeit von der Sendeleistung einstellbar sind.

Bei einem Verfahren der eingangs genannten Art wird die Aufgabe erfindungsgemäß dadurch gelöst, dass die Sendeleistung in Abhängigkeit von der Intensität des reflektierten Lichtstrahls eingestellt wird, dass ferner aus der Intensität ein Grauwert des Messpunktes bestimmt wird, und dass die Bestimmung des Grauwertes in Abhängigkeit von der Sendeleitung korrigiert wird.

Die der Erfindung zu Grunde liegenden Aufgabe wird auf diese Weise vollkommen gelöst.

Die Erfindung ermöglicht bei in der Regel reduzierter Sendeleistung eine qualitativ hochwertige Wiedergabe der Umgebung des Laserscanners in Halbtondarstellung. Dabei werden Abbildungsfehler vermieden, wenn bei unterschiedlicher Entfernung und/oder unterschiedlichem Reflexionsvermögen des Messpunktes die Sendeleistung in der beschriebenen Weise erhöht bzw. vermindert wird. Da nämlich bei der Bildung des Grauwertes die Sendeleistung berücksichtigt wird, wird der durch das Nachstellen der Sendeleistung systematisch erzeugte Messfehler gerade wieder herausgerechnet, so dass ein unverändert getreues Abbild der Umgebung als Halbtondarstellung erzeugt wird.

Erfindungsgemäß wird für weiter entfernte und/oder schwach reflektierende Messpunkte die Sendeleistung entsprechend erhöht, damit das reflektierte Signal noch ausreichend groß ist, um den Dynamikbereich des Empfängers nicht zu überfordern. Umgekehrt kann man die Sendeleistung bei sehr nahen und/oder stark reflektierenden Messpunkten auch entsprechend vermindern. Mit diesem Kunstgriff gelingt es daher, auf relativ einfache Weise eine zuverlässige Messung auch über große Entfernungsund/oder Grauwertbereiche hinweg zu ermöglichen, ohne dass für den Empfänger ein übertriebener Aufwand betrieben werden muss, oder die Möglichkeiten von handelsüblich erhältlichen Empfängern überhaupt zu überfordern. Ferner wird durch die Begrenzung der Sendeleistung ein geringerer Energieverbrauch ermöglicht und es werden Personen, die in der Nähe des Scanners stehen, zuverlässig gegen Schäden, insbesondere Augenschäden, geschützt.

Bei einer bevorzugten Weiterbildung des erfindungsgemäßen Laserscanners ist die Sendeleistung derart einstellbar, dass die Intensität des reflektierten Lichtstrahls mindestens näherungsweise konstant gehalten wird.

Diese Maßnahme hat den Vorteil, dass sogar Empfänger mit sehr geringem Dynamikbereich und daher mit sehr geringen Kosten eingesetzt werden können.

Bei einem praktischen Ausführungsbeispiel der Erfindung wird der Lichtquelle eine einstellbare Stromversorgungseinheit zugeordnet, wobei der Empfänger über eine erste Kennlinienstufe mit der Stromversorgungseinheit verbunden ist.

Diese Maßnahme hat den Vorteil, dass mit einfachen schaltungstechnischen Mitteln eine Einstellung der Sendeleistung bei unterschiedlicher Intensität des reflektierten Messstrahls möglich wird, wobei die Kennlinie der Kennlinienstufe in Abhängigkeit von den physikalischen Gegebenheiten so ausgelegt werden kann, dass die Funktion der Intensität bzw. der Leistung des ausgesandten Lichtstrahls über der Intensität des reflektierten Messstrahls näherungsweise linear, wenn nicht sogar mindestens näherungsweise konstant wird.

Bei einer praktischen Ausführungsform dieses Ausführungsbeispiels sind die zweiten Mittel als einstellbarer Verstärker ausgebildet, dessen Steuereingang über eine zweite Kennlinienstufe mit der Stromversorgungseinheit verbunden ist.

Auch hier ergibt sich der Vorteil, dass die Realisierung dieses Ausführungsbeispiels mit relativ einfachen schaltungstechnischen Mitteln möglich ist, wobei die zweite Kennlinienstufe wiederum in Abhängigkeit von den physikalischen Gegebenheiten eine vollständige Kompensation der Nachstellung der Sendeleistung als Funktion der Intensität des reflektierten Lichtstrahls ermöglicht.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine äußerst schematisierte perspektivische Darstellung eines Einsatzes einer erfindungsgemäßen Vorrichtung in der Praxis;
- Fig. 2: ein schematisiertes Blockschaltbild eines Ausführungsbeispiels einer erfindungsgemäßen Vorrichtung.

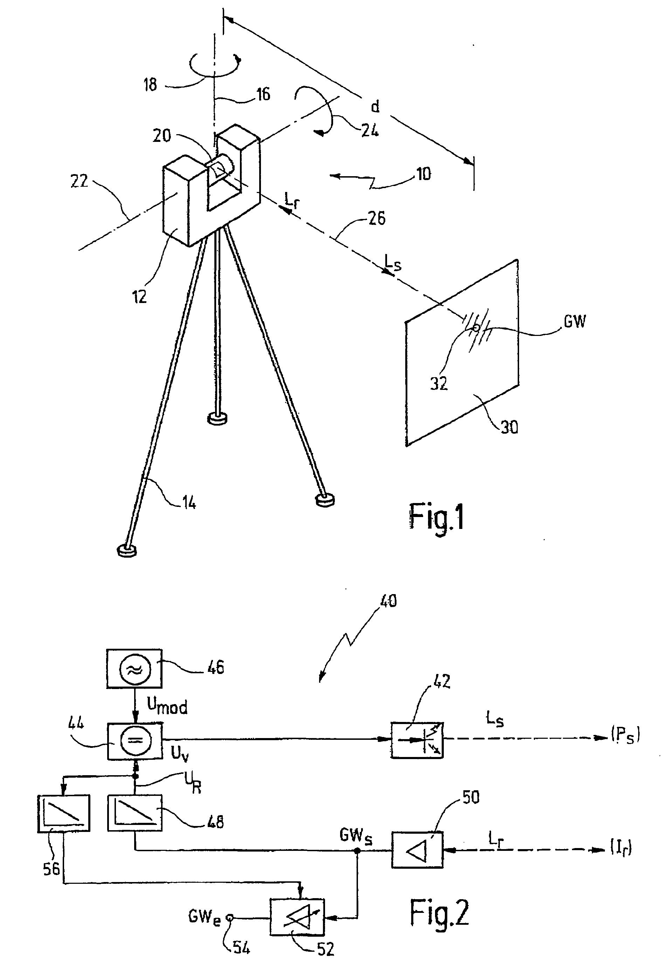

In Fig. 1 ist mit 10 ein Laserscanner zum optischen Abtasten und Vermessen einer Umgebung des Laserscanners 10 bezeichnet. Bei dem in Fig. 1 dargestellten Anwendungsbeispiel soll von einem statischen Punkt aus ein Abbild der Umgebung mit idealerweise 360° Raumwinkel erzeugt werden.

Hierzu enthält der Laserscanner 10 einen Messkopf 12, der auf einem raumfesten Stativ 14 steht. Der Messkopf 12 ist dabei als Ganzes relativ langsam um eine Vertikalachse 16 drehbar, wie mit einem Pfeil 18 angedeutet.

Der Messkopf 12 enthält seinerseits einen Rotor 20, der wesentlich schneller, d.h. mit wesentlich höherer Drehzahl, um eine Horizontalachse 22 drehbar ist, wie mit einem Pfeil 24 angedeutet.

Der Rotor 20 sendet einen Lichtstrahl 26 aus. In Fig. 1 ist mit Ls der vom Rotor 20 ausgesandte Strahl bezeichnet, während ein von einem Objekt 30 in der Umgebung reflektierter Strahl mit Lr angegeben ist.

Bei der in Fig. 1 dargestellten Situation befindet sich in einem Abstand d vom Messkopf 12 ein Objekt 30, auf dem ein Messpunkt 32 gerade vom Lichtstrahl 26 beleuchtet wird. Der Messpunkt 32 habe einen Grauwert GW.

Fig. 2 zeigt eine Schaltungsanordnung 40, die sich innerhalb des Messkopfes 12 befindet.

Die Schaltungsanordnung 40 enthält eine mit dem Rotor 20 umlaufende Lichtquelle 42, beispielsweise eine Laserdiode, die den Lichtstrahl Ls mit der Sendeleistung Ps aussendet. Die Lichtquelle 42 wird von einer einstellbaren Stromversorgungseinheit 44 mit einer Versorgungsspannung U_{V} gespeist. Auf diese Weise lässt sich die Sendeleistung Ps der Lichtquelle 42 einstellen.

An die Stromversorgungseinheit 44 sind zum Beeinflussen der Sendeleistung Ps einerseits ein Modulationsoszillator 46 mit einer Modulationsspannung U_{Mod} und andererseits eine erste Kennlinienstufe 48 mit einer Ausgangs-Regelspannung U_{R} angeschlossen, deren Funktion noch erläutert werden wird.

Eingangsseitig enthält die Schaltungsanordnung 40 einen mit 50 angedeuteten Empfänger, der den reflektierten Lichtstrahl Lr mit der Intensität Ir empfängt. Der Empfänger 50 befindet sich vorzugsweise in unmittelbarer Nähe der Lichtquelle 42, weil der ausgesandt Strahl Ls sich ebenfalls in unmittelbarer Nähe des reflektiertem Strahls Lr befindet bzw. sogar mit diesem zusammenfallen kann. Im letztgenannten Fall kann zur Trennung der Strahlen Ls und Lr ein teildurchlässiger Spiegel oder dergleichen verwendet werden. Diese Probleme sind dem Fachmann auf dem Gebiet der Laserscanner bekannt und brauchen daher hier nicht weiter erläutert zu werden.

Der Empfänger 50 liefert an seinem Ausgang ein Signal, das einem scheinbaren Grauwert GWs entspricht. Der Empfänger 50 ist ausgangsseitig an einen einstellbaren Verstärker 52 angeschlossen. Der Verstärker 52 weist eine Ausgangsklemme 54 auf, an der ein Signal abnehmbar ist, das einem echten Grauwert GWe entspricht.

Der einstellbare Verstärker 52 wird in seinem Verstärkungsfaktor über eine zweite Kennlinienstufe 56 gesteuert, die eingangsseitig z.B. an den Ausgang der ersten Kennlinienstufe 48 angeschlossen ist. Dabei ist wichtig, dass die zweite Kennlinienstufe 56 eingangsseitig mit einem Signal beaufschlagt wird, das die Sendeleistung Ps wiedergibt. Dies kann im Ausführungsbeispiel das Ausgangssignal der ersten Kennlinienstufe 48 sein, muss es aber nicht.

Die Schaltungsanordnung 40 arbeitet wie folgt:
Über den Modulationsoszillator 46 wird in an sich bekannter Weise mit der Modulationsspannung U_{Mod} die Amplitude des ausgesandten Strahls Ls, d.h. die Sendeleistung Ps, moduliert. Dieses Modulationssignal erscheint dann auch im reflektierten Strahl Lr und wird über den Empfänger 50 als Entfernungssignal ausgewertet (nicht dargestellt).

Das Ausgangssignal des Empfängers 50 ist ein Maß für die Intensität Ir des reflektierten Lichtstrahls Lr. Dieses Signal wird der ersten Kennlinienstufe 48 zugeführt, die einen degressiven Verlauf hat. Der degressive Verlauf berücksichtigt die Änderung der Intensität Iᵣ in Abhängigkeit vom Abstand d und vom Grauwert GW. Am Ausgang der ersten Kennlinienstufe 48 liegt daher eine Regelspannung U_{R}, an, die umso höher ist, je kleiner die Intensität Ir infolge eines größeren Abstandes d oder eines größeren Grauwerts GW wird. Die Regelspannung U_{R} beeinflusst die Stromversorgungseinheit 44, so dass die Versorgungsspannung U_{V} in umgekehrter Abhängigkeit von der Intensität Ir zunimmt, und zwar vorzugsweise überproportional bzw. exponentiell. Damit steigert sich auch die Sendeleistung Ps, mit der Folge, dass die Intensität Iᵣ des reflektierten Strahls Lr weit weniger mit zunehmendem Abstand d bzw. Grauwert GW abnimmt, als dies ohne die beschriebene Regelung der Fall wäre. Im Extremfall bleibt sie mindestens näherungsweise konstant. Zu diesem Zweck kann dem beschriebenen Kreis 42, 44, 48, 50 noch eine Sollwertvorgabe hinzugefügt werden (nicht dargestellt).

Auf die Auswertung des Abstandes d hat diese Maßnahme keinen Einfluss, weil der Abstand d durch die Modulation gewonnen wird, d.h. durch die Phasenverschiebung zwischen der Modulationsspannung U_{Mod} und dem modulierten Anteil des reflektierten Strahls Lr.

Das Nachstellen der Sendeleistung Ps in Abhängigkeit von der Intensität Ir des reflektierten Lichtstrahls Lr führt zu einer systematischen Verfälschung des Grauwert-Signals, weil dieses direkt abhängig von der Intensität Iᵣ des reflektierten Strahls Lr ist. Dies ist der Grund, warum das Ausgangssignal des Empfängers 50 als "scheinbarer" Grauwert GWs bezeichnet wurde.

Um diese systematischen Verfälschungen wieder zu korrigieren, wird aus dem Ausgangssignal U_{R} der ersten Kennlinienstufe 48 oder einem anderen Signal, das die Sendeleistung Ps wiedergibt, über die zweite Kennlinienstufe 56 ein Korrektursignal gebildet, das den einstellbaren Verstärker 52 nachstellt, um die erwähnte Korrektur zu bewirken. An dessen Ausgangsklemme 54 erscheint somit der "echte" Grauwert Gwe.

Die Kennlinie der zweiten Kennlinienstufe 56 ist dabei ebenfalls degressiv, weil infolge der Nachstellung der Sendeleistung Ps für große Abstände d und hohe Grauwerte GW die gemessene Intensität Iᵣ größer ist als sie es wäre, wenn die Sendeleistung Ps nicht in Abhängigkeit von der Sendeleistung Ps nachgestellt würde.

## Patentansprüche

1. Laserscanner zum optischen Abtasten und Vermessen einer Umgebung des Laserscanners (10), mit einem Messkopf (12), der einen Lichtsender (48) vorgegebener Sendeleistung (Ps) zum Aussenden eines Lichtstrahls (Ls) aufweist und um mindestens eine Achse (16, 22) drehbar ist, wobei der ausgesandte Lichtstrahl (Ls) an einem Messpunkt (32) eines Objektes (30) in der Umgebung reflektiert und der reflektierte Lichtstrahl (Lr) mit einer Intensität (Ir) von einem im Messkopf (12) enthaltenen Empfänger (50) empfangen wird, **dadurch gekennzeichnet, dass** erste Mittel (44, 48) zum Einstellen der Sendeleistung (Ps) in Abhängigkeit von der Intensität (Ir) des reflektierten Lichtstrahls (Lr) vorgesehen sind, dass dem Empfänger (50) ferner zweite Mittel (52) zum Bestimmen eines Grauwertes (GWe) des Messpunktes (32) zugeordnet sind, und dass die zweiten Mittel (52) in Abhängigkeit von der Sendeleistung (Ps) einstellbar sind.

2. Laserscanner nach Anspruch 1, **dadurch gekennzeichnet, dass** die Sendeleistung (Ps) derart einstellbar ist, dass die Intensität (Iᵣ) des reflektierten Lichtstrahls (Lr) mindestens näherungsweise konstant gehalten wird,

3. Laserscanner nach Anspruch 1 oder 2, **dadurch gekennzeichnet, dass** der Lichtquelle (42) eine einstellbare Stromversorgungseinheit (44) zugeordnet ist und dass der Empfänger (50) über eine erste Kennlinienstufe (48) mit der Stromversorgungseinheit (44) verbunden ist.

4. Laserscanner nach einem oder mehreren der Ansprüche 1 bis 3, **dadurch gekennzeichnet, dass** die zweiten Mittel als einstellbarer Verstärker (52) ausgebildet sind, dessen Steuereingang über eine zweite Kennlinienstufe (56) mit der Stromversorgungseinheit (44) verbunden ist.

5. Verfahren zum optischen Abtasten und Vermessen einer Umgebung mittels eines Laserscanners (10), bei dem ein Lichtstrahl (Ls) vorgegebener Sendeleistung (Ps) ausgesandt und dabei um mindestens eine Achse (16, 22) gedreht wird, wobei der ausgesandte Lichtstrahl (Ls) an einem Objekt (30) in der Umgebung reflektiert und der reflektierte Lichtstrahl (Lr) mit einer Intensität (Ir) empfangen wird, **dadurch gekennzeichnet, dass** die Sendeleistung (Ps) in Abhängigkeit von der Intensität (Ir) des reflektierten Lichtstrahls (Lr) eingestellt wird, dass ferner aus der Intensität (Iᵣ) ein Grauwert (GWe) des Messpunktes (32) bestimmt wird, und dass die Bestimmung des Grauwertes in Abhängigkeit von der Sendeleitung (Ps) korrigiert wird.

6. Verfahren nach Anspruch 5, **dadurch gekennzeichnet, dass** die Sendeleistung (Ps) derart vergrößert wird, dass die Intensität (Iᵣ) des reflektierten Lichtstrahls (Lr) mindestens näherungsweise konstant gehalten wird.

## Claims

1. A laser scanner for optically scanning and measuring an environment of the laser scanner (10), comprising a measuring head (12), which has a light transmitter (48) having a predetermined transmission power (Ps) for emitting a light beam (Ls) and which is rotatable about at least one axis (16, 22), wherein the emitted light beam (Ls) is reflected at a measurement point (32) of an object (30) in the environment and the reflected light beam (Lr) is received with an intensity (Ir) by a receiver (50) contained in the measuring head (12), **characterized by** first means (44, 48) for setting the transmission power (Ps) as a function of the intensity (Ir) of the reflected light beam (Lr), further with second means (52) for determining a gray-scale value (GWe) of the measurement point (32) being assigned to the receiver (50), and with the second means (52) being adjustable as a function of the transmission power (Ps).

2. The laser scanner of claim 1, **characterized in that** the transmission power (Ps) is adjustable in such a way that the intensity (Iᵣ) of the reflected light beam (Lr) is kept at least approximately constant.

3. The laser scanner of claim 1 or 2, **characterized in that** an adjustable power supply unit (44) is assigned to the light source (42), and **in that** the receiver (50) is connected to the power supply unit (44) via a first characteristic curve stage (48).

4. The laser scanner of one or more of claims 1 to 3, **characterized in that** the second means are formed as an adjustable amplifier (52), the control input of which is connected to the power supply unit (44) via a second characteristic curve stage (56).

5. A method of optically scanning and measuring an environment by means of a laser scanner (10), in which a light beam (Ls) having a predetermined transmission power (Ps) is emitted and in this case is rotated about at least one axis (16, 22), the emitted light beam (Ls) being reflected at an object (30) in the environment and the reflected light beam (Lr) being received with an intensity (Ir), **characterized in that** the transmission power (Ps) is set as a function of the intensity (Ir) of the reflected light beam (Lr), further with a gray-scale value (GWe) of the measurement point (32) being determined from the intensity (Iᵣ), and the determination of the gray-scale value being corrected as a function of the transmission power (Ps).

6. The method of claim 5, **characterized in that** the transmission power (Ps) is increased in such a way that the intensity (Iᵣ) of the reflected light beam (Lr) is kept at least approximately constant.

## Revendications

1. Scanner laser pour le balayage optique et la mesure d'un environnement du scanner laser (10), avec une tête de mesure (12) qui comporte un émetteur de lumière (48) de puissance d'émission prédéfinie (Ps) pour l'émission d'un rayon lumineux (Ls) et qui peut tourner autour d'au moins un axe (16, 22), le rayon lumineux (Ls) émis étant réfléchi en un point de mesure (32) d'un objet (30) dans l'environnement et le rayon lumineux réfléchi (Lr) d'une intensité (Ir) étant capté par un récepteur (50) contenu dans la tête de mesure (12), **caractérisé en ce que** des premiers moyens (44, 48) sont prévus pour régler la puissance d'émission (Ps) en fonction de l'intensité (Ir) du rayon lumineux réfléchi (Lr), **en ce qu'**au récepteur (50) sont en outre affectés des deuxièmes moyens (52) pour la détermination d'une valeur de gris (GWe) du point de mesure (32), et **en ce que** les deuxièmes moyens (52) sont réglables en fonction de la puissance d'émission (Ps).

2. Scanner laser selon la revendication 1, **caractérisé en ce que** la puissance d'émission (Ps) est réglable de telle sorte que l'intensité (Ir) du rayon lumineux réfléchi (Lr) est maintenue au moins à peu près constante.

3. Scanner laser selon la revendication 1 ou 2, **caractérisé en ce qu'**à la source de lumière (42) est affectée une unité d'alimentation en courant réglable (44) et **en ce que** le récepteur (50) est relié à l'unité d'alimentation en courant (44) par l'intermédiaire d'un premier étage de courbe caractéristique (48).

4. Scanner laser selon l'une ou plusieurs des revendications 1 à 3, **caractérisé en ce que** les deuxièmes moyens sont configurés comme amplificateur réglable (52) dont l'entrée de commande est reliée à l'unité d'alimentation en courant (44) par l'intermédiaire d'un deuxième étage de courbe caractéristique (56).

5. Procédé pour le balayage optique et la mesure d'un environnement d'un scanner laser (10), pour lequel un rayon lumineux (Ls) de puissance d'émission (Ps) prédéfinie est émis et tourne ce faisant autour d'au moins un axe (16, 22), le rayon lumineux (Ls) émis étant réfléchi sur un objet (30) dans l'environnement et le rayon lumineux réfléchi (Lr) étant capté avec une intensité (Ir), **caractérisé en ce que** la puissance d'émission (Ps) est réglée en fonction de l'intensité (Ir) du rayon lumineux réfléchi (Lr), **en ce qu'**en outre une valeur de gris (GWe) du point de mesure (32) est déterminée à partir de l'intensité (Ir) et **en ce que** la détermination de la valeur de gris est corrigée en fonction de la puissance d'émission (Ps).

6. Procédé selon la revendication 5, **caractérisé en ce que** la puissance d'émission (Ps) est augmentée de telle sorte que l'intensité (Ir) du rayon lumineux réfléchi (Lr) soit maintenue au moins à peu près constante.
